Europäisches Patentamt

European Patent Office

Office européen des brevets

(11) Publication number: **0 328 381**
**A2**

## (12) EUROPEAN PATENT APPLICATION

(21) Application number: **89301238.5**

(22) Date of filing: **09.02.89**

(51) Int. Cl.⁴: **F 16 D 13/68**

(30) Priority: **10.02.88 AU 6680/88**

(43) Date of publication of application:
**16.08.89 Bulletin 89/33**

(84) Designated Contracting States:
**AT BE CH DE ES FR GB GR IT LI LU NL SE**

(71) Applicant: **AUTOMOTIVE PRODUCTS PUBLIC LIMITED COMPANY**
**Tachbrook Road**
**Leamington Spa Warwickshire CV31 3ER (GB)**

(72) Inventor: **Rodgers, Bruce Gordon**
**48 Parkside Street**
**Elsternwick Victoria 3185 (AU)**

(74) Representative: **Gordon, Michael Vincent et al**
**GILL JENNINGS & EVERY 53-64 Chancery Lane**
**London WC2A 1HN (GB)**

(54) **Clutch plate assembly.**

(57) The invention relates to a clutch plate assembly having a hub (1), a friction facing carrier plate (4) mounted on the hub coaxial with the hub and capable of limited angular rotation relative to the hub, and a hub flange (8) fixed to the hub so as to rotate therewith. Damping springs (19) act between the facing carrier plate (4) and the hub flange (8) to resist rotation of the facing carrier plate relative to the hub, and those springs are located in spring pockets (18) formed between overlapping abutment formations formed integral with the facing carrier plate and the hub flange. Retaining means (15) retain the springs (19) in the spring pockets (18). The retaining means (15) may be integral with the hub flange and the facing carrier plate, or may comprise end caps (48) with formations (50) thereon for engaging the facing carrier plate and hub flange.

FIG 2

## Description

### CLUTCH PLATE ASSEMBLY

This invention relates to clutch plates as used in drive transmission systems such as the transmission system of a motor vehicle.

Conventional clutch plate assemblies include a hub having a hub flange secured thereto so that it rotates with the hub, and a main plate and side plate located on respective opposite sides of the hub flange. The main plate carries two oppositely facing friction facings which are usually connected to that main plate through a series of connectors. The side plate is provided for the purposes of balancing the load applied to a series of springs which is provided between the hub flange and the main plate and also to retain those springs in position.

The main plate is connected to the hub flange in such a way that the main plate and hub flange are capable of limited relative rotation. The aforementioned series of springs acts between the main plate and hub flange so as to resist that rotation and the springs of that series are arranged in a circle coaxial with the hub axis. Each spring is a compression spring such as a coil spring or a block of rubber or other suitable material, and is located in a respective opening provided through the hub flange. The main plate has a plurality of pairs of spaced abutments and the abutments of each pair are arranged to engage opposite ends of a respective spring. That engagement, however, occurs at a location radially outwards of the spring axis and would tend to urge the spring sidewards in the absence of the side plate which has corresponding abutments arranged to engage the springs on the opposite ends of their axes. Eccentric loading of the springs can lead to a jerky mode of operation and/or damage to the springs themselves.

Provision of the balancing side plate adds to the cost and weight of the assembly. Also, the main plate and side plate must be secured together by means of a riveting or like operation which adds to the time taken and number of operations necessary to produce a complete clutch assembly which is undesirable. The present invention enables elimination of that side plate and thereby provides a substantial advantage over the prior clutch plate assemblies. The invention also provides an arrangement in which it is not necessary to rivet some of the components together in order to assemble the clutch.

According to the invention there is provided a clutch plate assembly comprising a hub, a friction facing carrier plate mounted on the hub coaxially therewith a capable of limited angular rotation about the hub, a hub flange fixed to the hub so as to rotate therewith, damping springs acting between the facing carrier plate and the hub flange to resist rotation of the facing carrier plate relative to the hub, spring pockets formed between the facing carrier plate and the hub flange in which the damping springs are located, the spring pockets being formed between overlapping abutment formations formed integral with the facing carrier plate and the hub flange, and retaining means for retaining the damping springs in the spring pockets. In this specification the term "overlap" is not to be understood as requiring a directly opposed relationship. An overlap in the sense intended is created between an abutment of the facing carrier plate and the hub flange if a single plane at right angles to the rotational axis of the hub interests both the abutment and the hub flange part.

Various embodiments of the invention are described in detail in the following passages of the specification which refer to the accompanying drawings. The drawings, however, are merely illustrative of how the invention might be put into effect, so that the specific form and arrangement of the various features as shown is not to be understood as limiting on the invention.

In the drawings:

Figure 1 shows a cross-sectional side view of a first embodiment of clutch assembly according to the invention,

Figure 2 shows a front elevation of the clutch assembly of Figure 1,

Figure 3 and 4 show parts of the main plate and hub flange respectively of a second embodiment of the invention prior to assembly.

Figure 5 shows the components depicted in Figures 3 and 4 assembled together,

Figure 6 shows a cross-sectional side view of a third embodiment of clutch assembly according to the invention,

Figure 7 shows a front elevation of the clutch assembly of Figure 6, and

Figure 8 shows a cross-sectional side view of a fourth embodiment of clutch assembly according to the invention.

In each of the attached drawings a clutch plate assembly is shown. These assemblies include a hub 1 having a central internally splined bore 2 and a radially outer surface 3 of stepped configuration. A main plate 4 is mounted on the hub 1 coaxially with the hub 1 and the main plate 4 is capable of limited angular rotation relative to the hub 1. The main plate 4 in use will carry friction facings (not shown) around the radially outer edge 5 thereof in conventional manner and the friction facings may be secured to the main plate by means of rivets which pass through holes 6 formed in the main plate 4.

The main plate 4 is mounted on the hub 1 between a shoulder 7 formed integral with the hub and a hub flange 8 which is fitted onto the hub after the main plate has been located in position. The hub flange is welded or otherwise fixed to the hub 1 so as to rotate with the hub 1 in use, and to clamp the plate 4 in position against the shoulder 7. Friction washers 9 are provided on each face of the main plate 4 and serve to dampen any vibrations or oscillations which may be set up in use. The friction washer 10 inbetween the hub flange 8 and the main plate 4 may comprise a belville washer which will expand to operate effectively where the gap between the hub flange 8 and man plate 4 varies for any reason.

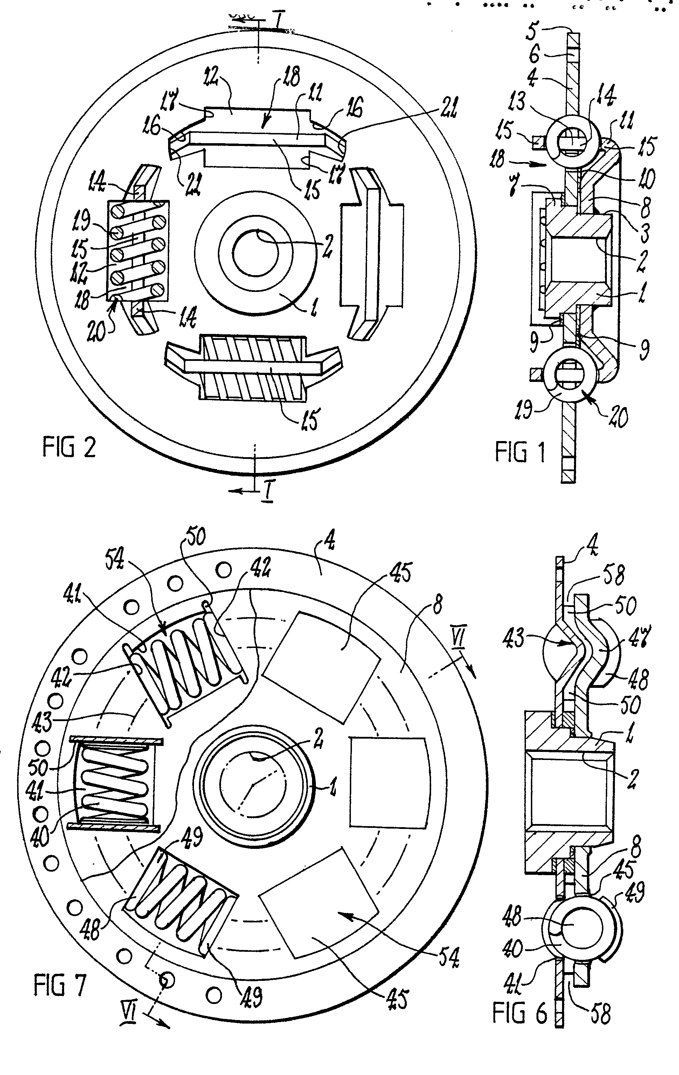

Referring specifically to Figures 1 and 2, the radially outer edge of the hub flange 8 carries four tabs 11 of substantially rectangular configuration, the tabs 11 being integral with the hub flange 8. The tabs 11 are bent at substantially right angles to the axis of rotation of the hub and pass through four openings 12 formed in the main plate 4. Each of the tabs 11 has a rectangular opening 13 formed therein. Thus, each tab includes a pair of end bars 14 which extend substantially perpendicularly to the plane of the main plate 4, and a pair of side bars 15 which extend substantially parallel to the plane of the main plate 4. Each opening 12 in the main plate 4 includes a slot 16 formed in the end walls 17 of the opening and the end bars 14 are located in and slidable in those slots 16. Each slot 16 is preferably approximately in the centre of the end wall 17 and each slot has a length such that the opposed ends 21of the two slots 16 are spaced apart by a distance substantially greater than the overall length of a tab 11 to be passed through that opening.

A series of spring pockets 18 are formed between the hub flange 8 and the main plate 4 in the regions where the tabs 11 pass through the openings 12. A coil spring 19 is located in each spring pocket 18 and the springs 19 are retained in the spring pockets 18 by means of the end bars 14 and side bars 15. The end bars 14 and end walls 17 form abutments against which the ends 20 of the springs 19 react under conditions of use where the main plate 4 rotates relative to the hub flange 8. It will be appreciated that no riveting operation is necessary to form the spring pockets 18 since the tabs are formed integral with the hub flange 8 and are simply bent from the plate material from which the hub flange is formed. The openings 12 and 13 are punched or otherwise formed through the plate material of the main plate and hub flange respectively.

A spring 19 located within a spring pocket 18 will be supported at each end by both the end bars 14 and the end walls 17 so that there is a four print engagement at the end of each spring 19. That is, the adjacent end 17 of the main plate opening 12 engages the spring at two points on respective opposite sides of the spring axis, and the adjacent ends of the tabs opening engages the spring 19 at another two points which are at substantially 90° relative to the first two and are also on respective opposite sides of the spring axis. Each point of engagement is substantially on a diametral plane of the spring 19 and consequently there is no tendency for the spring to be urged sidewards as pressure between the spring end and an abutment surface increases.

When the clutch plate assembly is subjected to working conditions, the main plate 4 is sometimes urged to rotate relative to the hub flange 8 and compression of the springs 19 allows that rotation to take place. As that relative rotation occurs, each tab 11 moves further along one of the clearance slots 16 of the respective hub flange opening. The associated spring 19 is thereby compressed between the end of the hub flange opening adjacent that slot and the opposite end 17 of the associated tab opening. Thus, under load, each end 20 of the spring 19 is subjected to two point engagement as against the four point engagement which can occur under the relaxed condition of the assembly.

Excessive over travel or relative rotation may be prevented by at least one of the tabs 11 engaging an end 21 of the clearance slot 16 along which it moves. Such a stop arrangement provides a further advantage over the prior art in that it eliminates the need for special stop pins or the like as are used in conventional clutch plate assemblies.

In a variation (not shown) of the arrangement described, the outermost side bar 15 of each tab 11 is omitted or substantially omitted. The outermost side bar 15 may be completely omitted if it is desired to reduce the overall depth of the assembly, whereas partial omission may be adopted if it is desired to simply reduce the weight of the assembly. In the former case, a short axially entending finger may be provided on each end bar 14 of each tab to project into the associated spring end and thereby restrain the spring against lateral movement. In the latter case, a small section of the outermost side bar 15 may remain at each end of the tab so as to hold the spring against lateral movement.

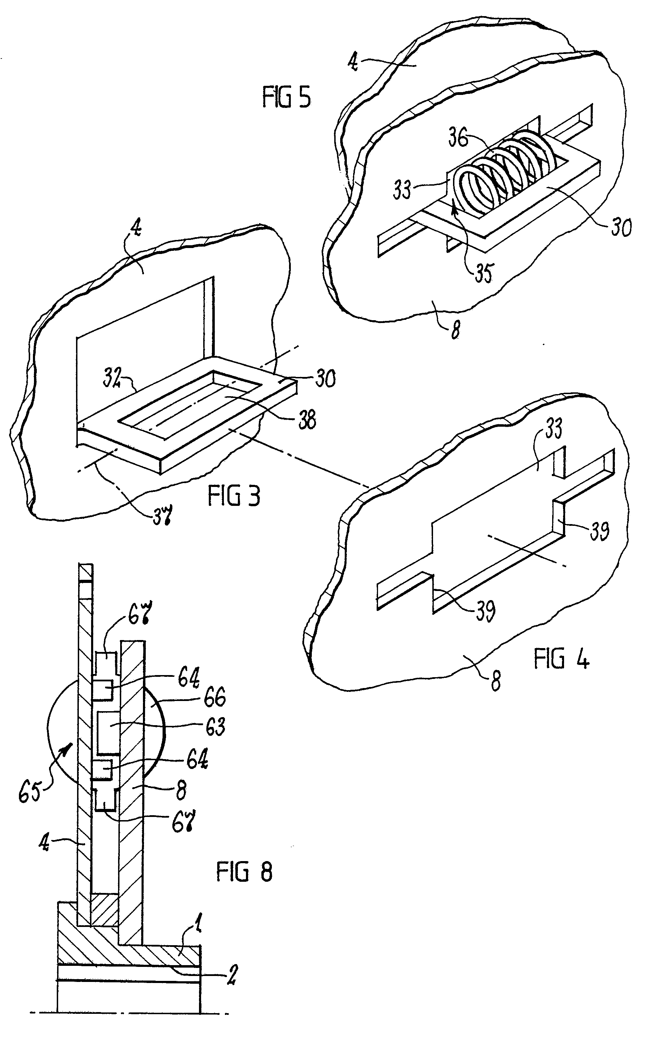

Figures 3 to 5 of the drawings depict a similar arrangement to that shown in Figures 1 and 2, but in this arrangement tabs 30 have been punched from the main plate 4. One longitudinal edge 32 of each tab 30 remains integral with the main plate 4. The tab passes through an opening 33 formed in the hub flange 8 thereby providing an overlap between the hub flange 8 and main plate 4. A spring pocket 35 is formed within each opening 33 and a coil spring 36 is located in each spring pocket. Abutments are provided at the ends of the spring pockets 35 in the manner as described in relation to the previous embodiment. The relative arrangement of the main plate 4 and hub flange 8 is preferably such that the longitudinal centreline 37 of each tab opening 38 is substantially centrally located between the opposed side walls 39 of the opening 33. The axis of the spring 36 within each tab opening 38 will preferably be coincident with the centreline 37 of the opening 38. There is thus a four point abutment arrangement at each end of the spring 36 in a manner similar to that described with respect to the previous embodiment.

According to another embodiment of the invention as shown in Figures 6 and 7 the main plate is provided with a plurality of spring openings 41, as in the past, and an abutment 42 is formed at each end of each such openings 41. The abutments are formed by respective ends of channel-like portions 43 of the main plate 4 which are created by a pressing, stamping, or other suitable operation. Each channel-like portion 43 extends longitudinally between a respective pair of spring openings 41 and can have any suitable shape in transverse cross section. In an example arrangement, one form of which is shown by the attached Figure 6, the channels 43 are of shallow V shape in transverse cross section. Other configurations are clearly also possible.

The hub flange 8 is preferably provided with spring abutments in a manner similar to the main plate 4. That is, it has a plurality of spring openings 45 and a channel-like portion 46 between each two adjacent openings. As seen from Figure 6, each channel-like portion 43 of the main plate 4 nests within a respective channel-like portion 46 of the hub flange 8. The openings 41 and 45 are opposite each other and define the spring pockets between them.

It is preferred in the above described arrangement that each spring 40 has a cap 48 at each end to facilitate proper engagement with the abutments of the two plates. Part of each abutment crosses the spring centre line so as to ensure balanced engagement with the springs 40. There is thus an overlap arrangement between the hub flange 8 and main plate 4. The cap 48 at each end of each spring 40 preferably has means thereon for locating the cap on or around the spring end. That means may take the form of a skirt 49 around the periphery of the cap 48, the cap thus being of dish shaped form, the end of the spring 40 nesting inside the skirt 49. The cap will also preferably have laterally extending ears 50 which locate in the gap 58 between the hub flange 8 and the main plate 4 as shown in Figure 6. The ears prevent the end caps 48 becoming dislodged from their respective spring pockets 54 and, because the springs 47 are nesting within the skirt 49 of each end cap 48, the springs 47 are held in position in the spring pocket 54 by the end caps 48.

Figure 8 shows yet another embodiment in which the spring abutments 50 of both the flange 8 and main plate 4 are formed by tabs 63 and 64 respectively projecting laterally upwards from the surface of the respective plate or flange. In each case, the tabs 63 of the hub flange 8 project towards the main plate 4 and overlap, in the sence previously referred to, the tabs 64 of the main plate 4 which project towards the hub flange 8. In the arrangement shown, which is not the only possible arrangement, the hub flange 8 and main plate 4 each have a plurality of spring openings 64 and at least one tab 63, 64 at the end of each opening 65.

In the Figure 8 arrangement the main plate 4 has two spaced tabs 64 at each end of each opening 65, whereas the hub flange 8 has only one tab 63 at each location and that tab 63 is arranged to pass between the adjacent two tabs 64 of the main plate 4. Other arrangements are clearly possible. It is also preferred in this arrangement to provide the springs with end caps 66, and for the end caps 66 to have laterally extending ears 67 for holding the end caps and springs in position.

One further reason why the foregoing arrangements are believed to be an improvement over prior art assemblies is that the assembly does away with the need to rivet the main plate to the side plate. It will be noted in each of the embodiments shown the hub has a stepped outer configuration and no side plate is necessary to hold the assembly together. The main plate 4 is held in position on the hub 1 between a shoulder 7 on the hub 1 and a friction washer 9 located between the main plate 4 and the hub flange 8. This arrangement allows for the relative rotation of the hub flange 8 and main plate 4 but obviates the need to secure the main plate, by means of rivets or other fasteners, to a side plate or the like. The hub flange 8 will be secured to the hub 1 by means of welding or some other suitable securing arrangement. The invention thus extends to a clutch assembly wherein the main plate 4 is held in position in a relatively rotatable manner by the hub flange alone.

One of the substantial advantages of the invention is that the springs are centrally loaded in use. The resultant load axis in each of the embodiments described is at least substantially coincident with the spring axis. This results because of the overlapping nature of the abutments of the main plate 4 and hub flange 8.

It will be apparent from the foregoing description that the invention in any of its forms provides a substantial advantage over the prior art. A clutch plate assembly according to the invention is generally of lighter construction than prior clutch plate assemblies and is less expensive and requires fewer manufacturing steps to manufacture.

Finally, it is to be understood that various alterations, modifications and/or additions may be introduced into the constructions and arrangements of parts previously described without departing from the spirit or ambit of the invention.

## Claims

1. A clutch plate assembly comprising a hub (1), a friction facing carrier plate (4) mounted on the hub coaxially therewith and capable of limited angular rotation about the hub, a hub flange (8) fixed to the hub so as to rotate therewith, damping springs (19) acting between the facing carrier plate (4) and the hub flange (8) to resist rotation of the facing carrier plate relative to the hub (1), spring pockets (18, 54) formed between the facing carrier plate and the hub flange in which the damping springs are located, the spring pockets being formed between overlapping abutment formations (17, 14) formed integral with the facing carrier plate and the hub flange, and retaining means (15, 48) for retaining the damping springs (19,40) in the spring pockets (18, 54).

2. A clutch plate assembly according to claim 1 wherein the facing carrier plate has a plurality of openings (12) provided therethrough spaced around the facing carrier plate and the hub is provided with corresponding tabs (11) formed integral with the hub which pass through the openings to form the overlapping abutment formations.

3. A clutch plate assembly according to claim 1 wherein the hub flange (8) has a plurality of openings (33) provided therethrough spaced around the hub flange and the facing carrier plate is provided within corresponding tabs (30) formed integral with the facing carrier plate which pass through the openings to form the overlapping abutment formations.

4. A clutch plate assembly according to claim 1 wherein the facing carrier plate and the hub flange each have a plurality of tabs (63, 64) formed integral therewith and bent towards and overlapping with each other to form said spring pockets and said abutment formations.

5. A clutch plate assembly according to any preceding claim wherein a pair of end caps (48) is provided for each damping spring said end caps each including engagement means (49) whereby said end cap engages with an end of a damping spring, said end caps each having at least one laterally projecting ear (50) which locates between the hub flange and the facing carrier plate to hold the end cap in position and thereby retain its respective damping spring in position in the spring pocket.

6. A clutch plate assembly according to claim 5 wherein each end cap is dish shaped forming a hollow in one face of the end cap and the end of the damping spring locates in said hollow.

7. A clutch plate assembly according to any preceding claim wherein a shoulder (7) is formed on the radially outer face (3) of the hub (1) and the facing carrier plate (4) is mounted on the hub (1) between the shoulder (7) and the hub flange (8), the hub flange being fixed to the hub to rotate therewith and to retain the facing carrier plate on the hub.

8. A clutch plate assembly according to claim 7 wherein friction means (9) is located between the hub flange (8) and the facing carrier plate (4).

9. A clutch plate assembly according to claim 8 wherein said friction means (9) comprises a belville spring.

10. A clutch plate assembly comprising a hub (1), a friction facing carrier plate (4) mounted on the hub coaxial therewith and capable of limited angular rotation about the hub, a hub flange (8) fixed to the hub so as to rotate therewith, damping springs (19, 36) acting between the facing carrier plate and the hub flange to resist rotation of the facing carrier plate relative to the hub, spring pockets (18, 35) being formed between the facing carrier plate and the hub flange by tabs (11, 30), integral with either the carrier plate or hub flange, which pass through corresponding openings (12, 33) provided in the respective other of the carrier plate or the hub flange.

FIG 2

FIG 1

FIG 7

FIG 6

FIG 5

36

33

35

30

8

4

FIG 3

32

30

38

37

4

33

39

39

8

FIG 4

67

64

66

63

64

8

67

65

4

1

2

FIG 8